# EUROPEAN PATENT APPLICATION

(11) **EP 3 419 126 A1**
(43) Date of publication of application: **26.12.2018**
(21) Application number: 17382375.8
(22) Date of filing: 20.06.2017
(51) Int. Cl.: H02B 1/14, H02G 5/04, H02B 1/20

(54) **PROTECTION DEVICE FOR INTERCONNECTING ELECTRICAL BUSBARS**

(71) Applicant: Gorlan Team, S.L.U., 48340 Amorebieta Vizcaya (ES)
(72) Inventor: GÓMEZ BARBERO, Jose, Julio, 48340 AMOREBIETA (Vizcaya) (ES)
(74) Representative: Herrero & Asociados, S.L.

(57) **Abstract**

The present invention relates to a protector for at least one conductive flat bar (4) of an electrical busbar, with a retention area for hanging from the at least one conductive flat bar, and with a protection area (6) for covering a larger front face (7) of the conductive flat bar, wherein the protection area comprises at least a first portion (8) and a second portion (10), which is elevated with respect to the first portion, such that in the assembly position a cavity which allows housing nuts and bolts for connecting another conductive flat bar is defined between the conductive flat bar and the second portion.

## Description

### Field of the Art

The present invention relates to a protection device for electrical busbars.

### Background of the Invention

Different systems for protecting busbars, preventing electrocution accidents caused by an operator possibly contacting said busbars, are available today. Electrical busbar protection devices generally cover the conductive flat bars of the busbars of a power box, connecting an electric distribution system with the network powering it, while at the same time allowing a certain access for making the required electrical connections.

However, electric switchboards usually receive power from equipment that is not integrated in the horizontal busbar. This makes it necessary to make, at a certain point of the busbar, an interconnection between the horizontal busbar and a vertical busbar, or a busbar from the rear portion of the board, or to connect it to another horizontal busbar. The interconnections are made by screwing together the bars to be coupled and, in order to assure the correct electrical contact between the coupled bars, screws that have a hexagonal head, the head of which projects from the plane of the busbar, and allow providing tightening torque suitable for this attachment, are preferably used. Due to the often high circulating amperage, screws having a large size (in the order of M10 or larger) are required, or more than one screw may have to be used. Furthermore, to assure suitable long-term working of the attachment, this attachment must be provided with elastic elements such as washers which absorb contractions and expansions that will occur due to the change in temperature throughout the life of the attachment. This means that the nut-and-bolt assembly projects even more from the plane of the busbar.

The problem that arises in these busbar interconnection areas is that, in the protectors known up until now in the state of the art, there is not enough space between the protector and the busbar for housing these nuts and bolts, so said protectors cannot be used in boards of this type, unless they are modified by hand and customized to each board, which results in an inefficient and non-reliable solution. Furthermore, "customized" solutions for protecting these interconnection areas do not allow using that space for installing a base, so a valuable space is lost.

On the other hand, protectors known in the state of the art which allow making electrical connections in the busbar, without having to disassemble the protector, usually have holes or grooves which make it possible to access said busbar therethrough.

Therefore, the front portion of the protector must be located as close as possible to the busbar itself to allow contacting the busbar with a reasonably short distance. This, in practice, means that the protectors are usually designed for being placed a few millimeters from the busbar, so the space between the protector and the busbar does not allow housing the nuts and bolts required for interconnecting busbars, the head of which projects from the busbar.

It must be pointed out that the state of the art contemplates the possibility of using screws with a countersunk head for making this interconnection of the busbars, so the head of the screw does not project from the busbar and allows placing any type of standard protector. However, in addition to requiring a prior countersinking of the busbar, this solution has the problem of offering mechanical and electrical connections with worse performances than that offered by screws having a hexagonal head.

Therefore, the state of the art lacks a protection device for electrical busbars which, with a simple and easy structure, can be installed in the electrical busbar interconnection area, and furthermore makes it easier for connecting parts of equipment (such as fuse bases) in the same space where the interconnection of busbars with the suitable nuts and bolts is made.

### Description of the Invention

The present invention solves the aforementioned problems by providing a protector with a configuration which allows housing nuts and bolts and at the same time making use of the busbar interconnection space for connecting parts of equipment (such as fuse bases). To that end, a first aspect of the invention relates to a protection device for at least one conductive flat bar of an electrical busbar, with a retention area so that the device can hang from the at least one conductive flat bar, and with a protection area for covering a larger front face of the conductive flat bar, wherein the protection area comprises at least a first portion and a second portion, wherein the second portion is elevated with respect to the first portion, such that in the assembly position a cavity which allows housing nuts and bolts for connecting another conductive flat bar is defined between the conductive flat bar and the second portion.

In one of the embodiments of the invention, the retention area comprises a first retaining face and a second retaining face, arranged perpendicularly to one another, allowing the device to hang from the conductive flat bar of the electrical busbar, such that the first retaining face contacts one of the smaller faces of the conductive flat bar, and the second retaining face contacts, at at least one point, a larger rear face of the conductive flat bar.

Additionally, according to a particular embodiment of the invention the first portion of the protection area comprises an access area with at least one hole, for example, in the form of a groove, wherein the at least one hole has dimensions which prevent access with a finger and in turn allow introducing a contact part for making electrical connection with the busbar. It is contemplated that the second portion is located at a greater distance from the busbar than the access area.

According to a particular embodiment of the invention, the first portion and the second portion of the protection area comprise two planar segments parallel to one another.

The present invention contemplates that the second portion is arranged, in the assembly position, facing the larger face of the conductive flat bar.

In one of the embodiments of the invention, the second portion defines a continuous cavity running between one side of the protection area and its opposite side. Therefore, the largest space possible for housing the nuts and bolts is advantageously assured.

The possibility of the cavity having an U shape and the first portion thereby being surrounded by this U-shaped cavity is contemplated. Advantageously, this allows the area for housing the head of the screws to be expanded, since with this configuration they can be received not only in the area below the first portion, but can also be housed on the sides of the first portion. Optionally, it is contemplated that the perimeter of the second portion comprises a chamfered edge.

One of the embodiments of the present invention contemplates elevating the second portion with respect to the inner face of the first portion, such that it allows housing one or more M10 or larger screw heads. Specifically, in one of the embodiments of the invention the second portion is elevated at least a distance of 7 mm with respect to the inner face of the first portion. If the assembly position is used as reference, this distance can be measured either from the inner face of the first portion or from the larger face of the conductive flat bar, since both of them are touching one another at at least one point.

Additionally, according to one of the embodiments thereof, the upper portion of the device of the present invention has a plurality of holes for housing a fuse base. Advantageously, these holes also serve as a guide for a person performing the installation as they make it easier to assemble the fuse bases.

In one of the embodiments of the invention, it is contemplated that the retention area has at least one holding tab for a conductive flat bar of the electrical busbar, such that said holding tab comprises the second retaining face. Therefore, in the assembly position, the protection device is advantageously fixed to said conductive flat bar through the holding tab.

Additionally, one of the embodiments comprises a lower portion arranged such that it completes a C shape.

According to one of the embodiments of the invention, the lower portion comprises coupling means for being attached to a second protection device. Therefore, an assembly consisting of several devices vertically coupled for covering busbars with several conductive flat bars can advantageously be formed. Specifically, one of the embodiments of the present invention contemplates an assembly consisting of three devices vertically coupled for protecting a three-phase busbar, although a greater or smaller number of devices can be coupled.

According to one of the embodiments of the invention, the protection area further comprises side coupling means arranged on one of the ends thereof for being attached to another protection device. Therefore, an assembly consisting of several devices laterally coupled for extending the length of the protection of a conductive flat bar can advantageously be formed.

In a particular embodiment of the invention, an assembly consisting of three protectors with any combination of the features described above is contemplated for three-pole horizontal busbars powered by a vertical busbar. Advantageously, the assembly consisting of three protectors is coupled on the three-pole busbar and allows housing the nuts and bolts interconnecting each of the flat bars of said horizontal busbar with those of the vertical busbar.

According to one of the embodiments of the invention, the lower portion comprises coupling means for being attached to a second identical protection device. Therefore, an assembly consisting of several devices vertically coupled for covering busbars with several conductive flat bars can advantageously be formed. Since the devices are coupled to one another, an assembly consisting of said devices is more securely fixed than a device alone. Specifically, one of the embodiments of the present invention contemplates an assembly consisting of three unipolar devices coupled vertically for protecting a three-phase busbar, although a greater or smaller number of devices can be coupled, or a single device, being in a single part, can cover several busbars at the same time.

According to one of the embodiments of the invention, the central portion of the protector, i.e., its protection area further comprises side coupling means arranged on one of the edges thereof for being attached to another identical protection device. Therefore, an assembly consisting of several laterally coupled devices for extending the length of the protection of a conductive flat bar can advantageously be formed. Since the devices are coupled to one another, an assembly consisting of said devices is more securely fixed than a device alone.

Therefore, the present invention involves a series of significant advantages including, among others, the ease of installation in busbars with conductive flat bars having a rectangular section that are connected by means of nuts and bolts having a large size, wherein the heads of the screws have a considerable dimension, such that they prevent placing standard protectors. Furthermore, once the protector of the present invention is installed, it is not necessary to remove it for the connection of electric equipment, which can be safely connected, since the interconnection area is protected at all times. Advantageously, the interconnection area of busbars is thereby used for connecting fuse bases, for example.

The present invention is particularly advantageous for busbars interconnected by means of nuts and bolts, but is likewise recommendable for use in areas of the busbar without nuts and bolts, since in the event of a possible change in the busbar configuration (for example, a new power supply connection) which requires using nuts and bolts, it would not be necessary to replace the protectors or makes modifications therein because the installation would have been ready to house the new nuts and bolts.

Although the protective device of the present invention is manufactured in insulating material and has a specific length, several identical modules can be attached together to achieve a greater length and width of the protected surfaces of the busbars.

### Brief Description of the Drawings

To complement the description that is being made and for the purpose of aiding to better understand the features of the invention, a set of drawings is attached as an integral portion of said description in which the following has been depicted with an illustrative and non-limiting character:
Figure 1 shows a side view of the protective device of the invention coupled to a conductive flat bar with nuts and bolts.
Figure 2 shows a view with several protective devices of the invention coupled vertically.
Figure 3 shows a view with several protective devices of the invention coupled to one another both vertically and horizontally.

### Detailed Description of the Invention

In view of the mentioned drawings, a protective device for interconnecting electrical busbars which allows the installation thereof even in areas with nuts and bolts having a large size can be described as a practical embodiment of the invention. It is therefore prevented that said areas can be frontally touched with the fingers, but it is kept the busbar accessible by means of an area with holes, for example in the form of grooves, allowing a certain piece to access for making electrical contact.

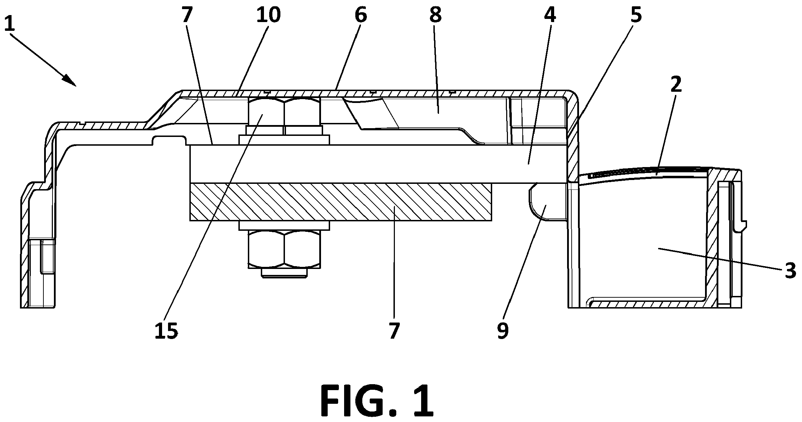

The protection device (1) of Figure 1 shows a preferred embodiment of the invention, which has in its upper portion (2) a housing area with holes (3) for connecting a fuse base or any other electric device without having to remove the protector completely or partially. In turn, this upper portion is adapted to have a retention area allowing the device to hang from the conductive flat bar (4) of the electrical busbar by one of its smaller faces (5). The smaller faces are the faces of the conductive flat bar having a smaller width.

The retention area has a first retaining face and a second retaining face, arranged perpendicularly to one another, allowing the device to hang from the conductive flat bar of the electrical busbar, such that in the assembly position, with the upper portion of the protection device supported on the conductive flat bar, the first retaining face contacts one of the smaller faces (5) of the conductive flat bar, and the second retaining face, preferably implemented as holding tabs (9) hanging from the upper portion of the device, contacts, at at least one point, the larger rear face of the conductive flat bar. In this configuration, the central portion (6) of the protection device is a protection area covering the other larger face (7) (the faces with a larger width) of the conductive flat bar, since it is adapted to form a right angle with said upper portion, said protection area touching, at at least one point, the larger face of the conductive flat bar.

The protection area has a first portion (8) and a second portion (10), wherein the second portion is elevated with respect to the first portion, such that in the assembly position, i.e., with the protector hanging from the conductive flat bar, the upper portion resting on a smaller face of a conductive flat bar of the electrical busbar and the first portion of the protection area contacting the larger face of the conductive flat bar, this second portion provides a cavity, between the conductive flat bar and the protector, said cavity having a suitable size for possibly housing the head of screws having a large size (for example, M10 screws with a hexagonal head). In one of the embodiments, this second portion has an elevation of 7 mm with respect to the first portion, but other measurements for the adaptation thereof to the measurements of the required nuts and bolts are possible.

From the profile view depicted in Figure 1, the second portion represents the outermost portion of the protector, whereas the first portion, further comprising grooves to allow for electrical contact, is a recessed area with respect to the second portion. From the side, this recessed area is seen as a step since the inner face of the first portion is envisaged for being located as close as possible to, or preferably in contact with, the conductive flat bar and, in contrast, the inner face of the second portion must be located at a certain distance with respect to the conductive flat bar to allow housing one or more screw heads.

The first portion and the second portion (or elevated area) are configured as planes parallel to one another, which are spatially distributed such that the first portion is located in an upper half of the protection area, or the central body of the protector, and extends to the upper edge of said protection area. In turn, the second portion is located in the rest of the protection area, or the central body of the protector, such that it offers a continuous cavity running from side to side of the protector and extends to the lower edge thereof, which thereby allows introducing a conductive flat bar with incorporated nuts and bolts.

The cavity corresponding to the elevation of the second portion with respect to the first portion envisaged for housing the nuts and bolts used in the busbar interconnection preferably has a constant height. Furthermore, in this preferred embodiment in order to expand the possibilities of placing screws in the conductive flat bars, the first portion does not extend from side to side of the protector, but is surrounded by the second portion or the elevated area, which has an U shape and a chamfered edge (11) running along the perimeter thereof, also including the edge which it shares with the first portion.

The protection device is fixed to the conductive flat bar by means of the holding tabs (9) that hang from the upper portion of the protection device.

As a result of the angle formed by the retaining faces with respect to one another, preferably a 90-degree angle, the first retaining face of the device can rest on the smaller face of said flat bar, so the rest of the body is hanging down. Therefore, the assembly of the protection device on the conductive flat bar is performed by simply hanging said protection device from the conductive flat bar, such that the flat bar is inserted into the space defined between the holding tabs and the inner face of the first portion of the protection area of the protector. Said tabs have an retaining face parallel to the protection area of the protector, such that there is defined an area for housing the conductive flat bar which, once inserted in said area, is trapped between the holding tab and the inner face of the first portion of the protection area, so the protector can be retained on the conductive flat bar more securely.

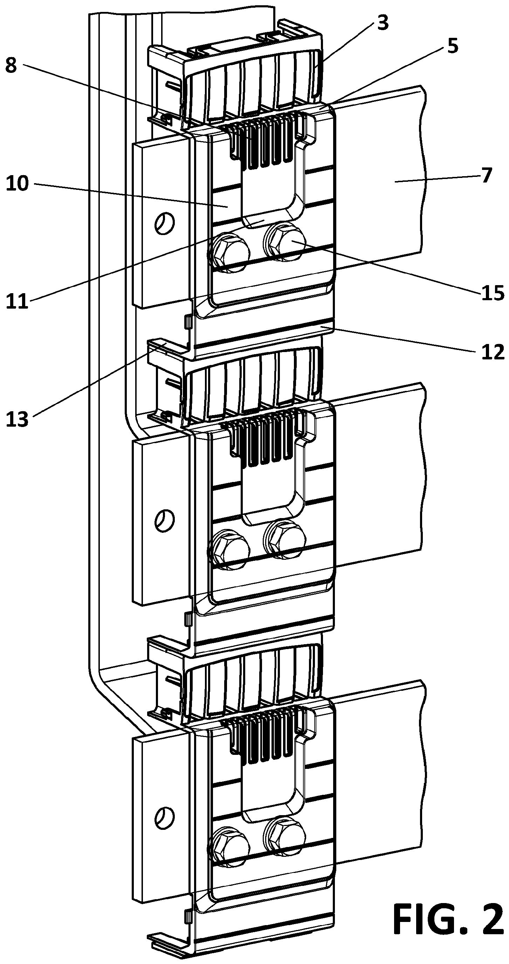

Figure 2 depicts one of the embodiments of the invention contemplating the installation thereof in assemblies of three, for a three-pole system, in which the horizontal busbar receives power supply from a vertical busbar from the rear portion of the electric switchboard. To fix protection devices to one another, the protection devices of the present invention preferably have a lower portion (12), arranged in a plane parallel to the upper portion, causing the device to have a C shape. This lower portion has assembling means (13) which allow, by means of a simple set of recesses, assembling the lower portion of a device with the upper portion of another device by way of tongue-and-groove joint.

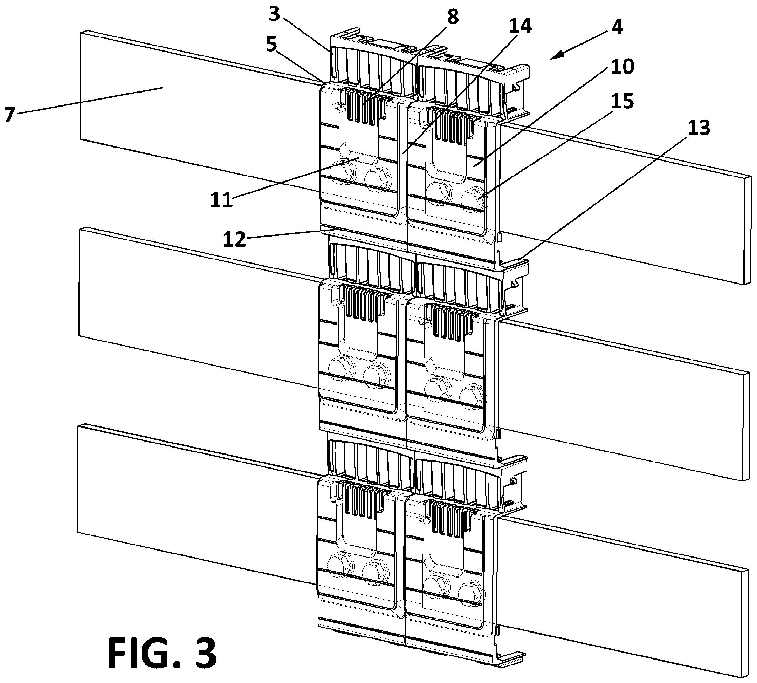

The protection device of the busbar interconnection areas of the present invention consists of an individual module that can be coupled to one of the conductive flat bars of a busbar, but these areas with nuts and bolts can sometimes exceed the width of an individual module, so installation having two or more modules is resorted to for covering a greater width (according to one of the embodiments, a single device covers a width of 100 mm, although other measurements are also indeed possible). In this sense, Figure 3 depicts a multiple protection device installation according to the present invention where, in addition to the vertical assembly described in Figure 2, the possibility of a horizontal assembly is also shown. Therefore, the entire front portion of the busbar can be covered and any accidental contact can be completely prevented. The lateral installation benefits from quick coupling means (14) by way of tongue-and-groove joint or fastening, arranged on the side edges of the central portion of the device so that it can be longitudinally attached to other contiguous identical device. The length of protection can therefore be increased as much as desired.

The protective device of the present invention can be installed both in simple conductive flat bars, without any nuts and bolts or connection, and in areas with nuts and bolts and interconnection of the conductive flat bars, maintaining in all scenarios all its advantages and qualities for protecting against human contact, housing fuse bases or making electrical contact easier, among others.

## Claims

1. Protection device (1) for at least one conductive flat bar (4) of an electrical busbar, with a retention area for hanging from the at least one conductive flat bar, and with a protection area (6) for covering a larger front face (7) of the conductive flat bar, wherein the protection device is **characterized in that** the protection area comprises at least a first portion (8) and a second portion (10), wherein the second portion is elevated with respect to the first portion, such that in the assembly position a cavity which allows housing nuts and bolts for connecting another conductive flat bar is defined between the conductive flat bar and the second portion.

2. Device according to claim 1, wherein the retention area comprises a first retaining face and a second retaining face (9), arranged perpendicularly to one another, allowing the device to hang from the conductive flat bar of the electrical busbar, such that the first retaining face contacts one of the smaller faces (5) of the conductive flat bar, and the second retaining face contacts, at at least one point, a larger rear face of the conductive flat bar.

3. Device according to claim 1, wherein the first portion of the protection area comprises an access area with at least one hole, wherein the at least one hole has dimensions which prevent access with a finger and in turn allow introducing a contact part for making electrical connection with the busbar.

4. Device according to any of the preceding claims, wherein the first portion and the second portion of the protection area comprise two planar segments parallel to one another.

5. Device according to any of the preceding claims, wherein the second portion defines a continuous cavity running between one side of the protection area and its opposite side.

6. Device according to claim 5, wherein the cavity has an U shape, and wherein the first portion is surrounded by this U-shaped cavity.

7. Device according to any of the preceding claims, wherein the second portion is elevated a distance with respect to the first portion, which allows housing one or more M10 screw heads.

8. Device according to any of the preceding claims, wherein the second portion is elevated at least 7 mm with respect to the first portion.

9. Device according to any of the preceding claims, further comprising a chamfered edge (11) on the perimeter of the second portion.

10. Device according to any of the preceding claims, further comprising a housing area (2) with a plurality of holes for housing fuse bases.

11. Device according to any of the preceding claims, wherein the retention area comprises at least one holding tab (9), for a conductive flat bar of the electrical busbar, comprising the second retaining face, such that, in the assembly position, the protection device is fixed to said conductive flat bar through said at least one holding tab.

12. Device according to any of the preceding claims, further comprising a lower portion (12) arranged such that the device has a C shape.

13. Device according to claim 12, wherein the lower portion comprises coupling means (13) for being attached to a second protection device.

14. Device according to any of the preceding claims, wherein the protection area further comprises side coupling means (14) arranged on one of the edges thereof for being attached to another protection device.

15. Assembly consisting of three devices according to any of the preceding claims for three-pole horizontal busbars powered by a vertical busbar.
